# EUROPEAN PATENT SPECIFICATION

(11) **EP 3 308 510 B1**
(45) Date of publication and mention of the grant of the patent: **17.04.2019**
(21) Application number: 15766403.8
(22) Date of filing: 30.07.2015
(51) Int. Cl.: H04L 12/917

(54) **DEVICE AND METHOD FOR MANAGING END-TO-END CONNECTIONS OF A NETWORK WITHIN A CENTRAL NETWORK MANAGEMENT ENTITY**
VORRICHTUNG UND VERFAHREN ZUR VERWALTUNG VON END-TO-END-VERBINDUNGEN EINES NETZWERKS IN EINER ZENTRALEN NETZWERKVERWALTUNGSENTITÄT
DISPOSITIF ET PROCÉDÉ DE GESTION DES CONNEXIONS DE BOUT EN BOUT D'UN RÉSEAU DANS UNE ENTITÉ CENTRALE DE GESTION DE RÉSEAU

(43) Date of publication of application: 18.04.2018
(73) Proprietor: Siemens Aktiengesellschaft, 80333 München (DE)
(72) Inventor: GUCK, Jochen, 81375 München (DE); KELLERER, Wolfgang, 82256 Fürstenfeldbruck (DE); KULKARNI, Vivek, 82008 Unterhaching (DE); RIEDL, Johannes, 84030 Ergolding (DE)
(86) International application number: PCT/EP2015/067544
(87) International publication number: WO 2017/016610

(56) References cited:
- WO-A1-2014/124666
- US-A1- 2015 163 159
- US-A1- 2015 195 138
- US-A1- 2015 207 755

## Description

The present invention relates to a device for managing end-to-end connections of a network within a central network management entity. The present invention further relates to a method for managing end-to-end connections of a network within a central network management entity.

A logically centralized network controller can control networks, i.e., by a distributed control plane managing several forwarding devices. In such networks, the network state, e.g. bandwidth, latency, buffer utilization, etc., can be collected from a forwarding plane and a centralized routing of data packets can be based on the network state information, as can be seen in the prior art document US 2015/163159 A1.

There are typically a large number of communication service requests that need to be addressed by such a network control. Every realization of such a service changes the network state and, in case of an immediately following service request, the service might suffer due to temporary inconsistency of network states in the controller and the network. This procedure may however be not fast enough, moreover it might not scale and might especially not be suitable for industrial networks fulfilling specific multiple constraint, e.g. maximum delay, etc., requirements.

In some network types, several middleware layer and interface architectures are used for adaptive quality of service (QoS) control that exploit real-time scheduling approaches. These architectures involve a control loop that is closed over the forwarding and control planes. Closed loop control over both the forwarding and control planes may introduce delays and measurement errors that are difficult to correct and therefore it is may be difficult to achieve a fast and accurate QoS control.

A state of the network contains the actual QoS situation of the network. It contains all per hop parameter and all end-to-end parameters which are needed for the QoS calculations. Some network systems take requests from the network and handle them by using the latest network state for the routing decision. However, the used state of the network has some limitations. The state has to be either constructed by polling all network devices or collecting broadcasted network information. However, this may lead to a time inconsistency and a time offset of the values.

In summary, existing network systems are either pre-planned or inherit time-inconsistency as mentioned in the following steps: 1) While adding a new flow, the routing algorithm finds the suitable path based on the network state; 2) The network state and related update is collected and/or polled by a network monitor in the control plane; 3) If there is a feasible path, this new flow will be embedded in the forwarding plane of the network. However, based on these steps, delay guarantees on the fly are difficult to provide.

It is one object of the present invention to provide a network management being able to provide delay guarantees during changes of a network structure.

According to a first aspect, a device for managing end-to-end connections of a network within a central network management entity is suggested, the network including a plurality of network resources. The device comprises a modeling unit for estimating a load of the network resources, a state unit for providing a quality of service status of the network, a resource allocation unit for pre-calculating quality of service parameters within the network based on the load of the network resources and the quality of service status of the network and for pre-allocating the network resources based on the pre-calculated quality of service parameters, and a routing unit for routing data packets based on the pre-allocated network resources, wherein the modeling unit, the state unit and the resource allocation unit form a first loop and wherein the modeling unit, the state unit and the routing unit form a second loop.

The respective unit, e.g. the modeling unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

Based on the suggested device, it is possible to employ a smart mechanism for managing end-to-end connections with quality of service (QoS) guarantees in a central network management entity for steering the network to provide the QoS guarantees. The central network management entity may be for example an SDN (software defined networking) controller.

By splitting the overall routing into a routing unit and corresponding loop and a resource allocation unit and a corresponding loop, the complexity of routing can be reduced. This split enables the routing of data packet flows with end-to-end QoS constraints like delay, loss, etc. by having a moderate computational complexity and a deterministic response time. This is the case as two algorithms can be used, one for the routing unit and the corresponding loop and one for the resource allocation unit and the corresponding loop.

As the routing unit and the corresponding loop work parallel to the resource allocation unit, a dynamic setup of delay constraint communication services may be enabled during runtime. The routing unit can define a path within the network using the existing resource allocation and at the same time the resource allocation unit can adapt the resource allocation if necessary. Such a dynamic adaptation of changes within the network structure may be needed by industry automation applications.

Pre-allocating the network resources based on the pre-calculated quality of service parameters may refer to the fact that the resource allocation unit selects network resources, i.e. network elements and links between the network elements, for providing a connection having specific QoS parameters.

Communication services in this context may refer to any services that have specific QoS requirements. These requirements may be for example delay, loss, or jitter of any data packets of the respective communication service. The routing unit handles these communication services and corresponding communication requests.

According to an embodiment, the modeling unit, the state unit, the resource allocation unit and the routing unit are located in a control plane of the network.

As a basis, instead of a control loop that is closed over the forwarding and control planes, the control loops are kept within the control plane. Thus, low cost commodity hardware may be used in the forwarding plane, i.e., the plane being responsible for forwarding data packets within the network, as the forwarding plane does not need to provide a complex functionality.

According to a further embodiment, the resource allocation unit is adapted to pre-allocate the network resources by distributing available network resources of at least one link within the network to queues of the at least one link, wherein each of the queues includes data packets to be transmitted collectively.

Instead of a control loop that is closed over the forwarding and control planes, a queue-link model is used to keep the control loop within the control plane. Queue-link model may denote that data packets to be transmitted collectively are arranged in queues. Each queue has a specific QoS behavior. One or more queues are assigned to one link. The resource allocation unit decides which network resources of this link are to be used by which queue. This may result in a change of the QoS behavior of the respective queue.

According to a further embodiment, the state unit is adapted to calculate a worst case delay for each queue.

Based on the information of the link, the state unit can calculate the delay for each queue and thus also a worst case delay. Based on this initial state, the routing unit may find routes that fulfill the deadline requirements of the communication service, i.e. the data packets.

According to a further embodiment, the routing unit is adapted to route data packets based on the pre-allocated network resources taking into account quality of service requirements of the data packets.

The routing unit may select a path for the data packets based on the allocated network resources as well as on actual QoS requirements of the data packets.

According to a further embodiment, the resource allocation unit is adapted to update the pre-allocation of the network resources when new links are added to the network and/or existing links are removed and/or when the data packets to be transmitted changes.

Thus, the resource allocation unit may react to changes of the network to dynamically adapt the pre-allocated network resources. Such changes may include changes of the network structure itself but also changes of the data packets to be transmitted, i.e. the demand for network links or changes of the QoS requirements of the data packets to be transmitted. According to a further embodiment, the modeling unit is adapted to estimate the load of the network resources based on information from the routing unit and based on information from the resource allocation unit.

Both, pre-allocated resources and actual data packets can thus be used for estimating the load of the network.

According to a further embodiment, the information from the routing unit includes information on paths being used for the data packets within the network.

Thus, the actual network situation, i.e., used paths and data packets, can be taken into account.

According to a further embodiment, the information from the resource allocation unit includes information on allocated resources.

Thus, available network resources can be taken into account when calculating the load of the network.

According to a further embodiment, the routing unit is adapted to determine a path for the data packets to be routed by minimizing the cost of a path from origin to destination while fulfilling the quality of service requirements of the data packets from origin to destination.

In this embodiment, the QoS requirements for the complete path may be taken into account.

According to a further embodiment, the quality of service requirements of the data packets from origin to destination are end-to-end quality of service requirements.

Each data packet may have QoS requirements which need to be fulfilled from the start point to the end point of the transmission of the data packets.

According to a further embodiment, the routing unit is adapted to determine the path for the data packets to be routed by minimizing the cost of the path from origin to destination while fulfilling the quality of service requirements of the data packets for each hop from origin to destination.

In addition, QoS requirements may be taken into account for each hop. This provides a more detailed QoS overview and improves the fulfillment of the QoS requirements.

According to a further embodiment, the quality of service requirements of the data packets for each hop from origin to destination are per hop quality of service requirements.

For each hop, i.e. for each transmission between two network elements, QoS requirements may be fulfilled.

Any embodiment of the first aspect may be combined with any embodiment of the first aspect to obtain another embodiment of the first aspect.

According to a second aspect, a method for managing end-to-end connections of a network within a central network management entity is suggested, the network including a plurality of network resources. The method comprises the following steps: estimating a load of the network resources, providing a quality of service status of the network, pre-calculating quality of service parameters within the network based on the load of the network resources and the quality of service status of the network, pre-allocating the network resources based on the pre-calculated quality of service parameters, and routing data packets based on the pre-allocated network resources, wherein the estimating step, the providing step, the pre-calculating step and the pre-allocating step form a first loop and wherein the estimating step, the providing step and the routing step form a second loop.

According to a further aspect, the invention relates to a computer program product comprising a program code for executing the above-described method for managing end-to-end connections of a network within a central network management entity when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the device of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a schematic block diagram of a device for managing end-to-end connections of a network within a central network management entity;
Fig. 2 shows a schematic flow diagram illustrating the processes within a resource allocation unit of the device of Fig. 1;
Fig. 3 shows a schematic flow diagram illustrating the processes within a routing unit of the device of Fig. 1; and
Fig. 4 shows a sequence of methods steps of a method for managing end-to-end connections of a network within a central network management entity.

In the Figures, like reference numerals designate like or functionally equivalent elements, unless otherwise indicated.

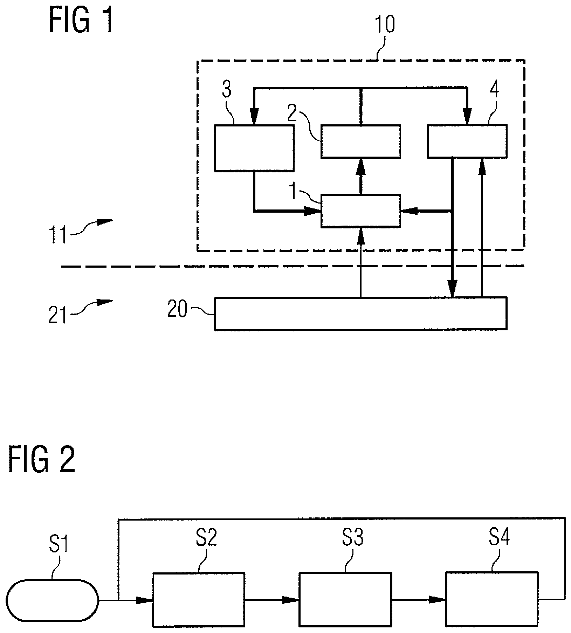

Fig. 1 shows a device 10 for managing end-to-end connections of a network 20. The device 10 may be part of a central network management entity.

The device 10 comprises a modeling unit 1, a state unit 2, a resource allocation unit 3 and a routing unit 4. All four units 1, 2, 3 and 4 are arranged within a control plane 11, wherein the network itself provides a forwarding plane 21. Thus, the network 20 can be less complex as the control is completely arranged within the control plane 11.

The modeling unit 1, the state unit 2 and the resource allocation unit 3 form a first loop. The modeling unit 1, the state unit 2 and the routing unit 4 form a second loop.

The modeling unit 1 estimates a load of the network resources. The modeling unit 1 receives an input from the network 20 itself, the resource allocation unit 3 and the routing unit 4.

The state unit 2 provides a quality of service status of the network 20. This is done based on information from the modeling unit 1.

The resource allocation unit 3 pre-calculates quality of service parameters within the network 20 based on the load of the network resources and the quality of service status of the network and pre-allocates the network resources based on the pre-calculated quality of service parameters.

The routing unit 4 routes data packets based on the pre-allocated network resources.

Fig. 2 shows an example of the processes within the resource allocation unit 3.

In step S1, the algorithm within the resource allocation unit 3 starts.

In step S2, the resource allocation unit 3 takes one physical link of the network 20.

In step S3, the resource allocation unit 3 finds a better resource allocation of the taken physical link for the actual data packets within the network 20.

In step S4, the resource allocation unit 3 performs a new resource allocation if the network 20 changes, for example when links are added or removed.

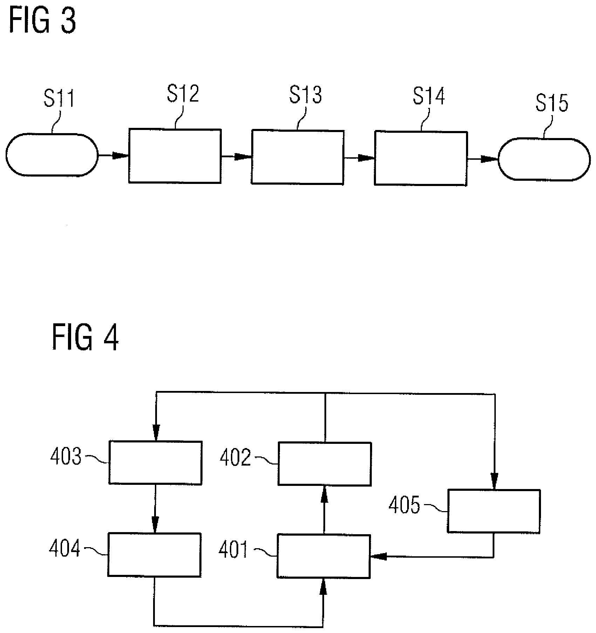

Fig. 3 shows an example of the processes within the routing unit 4.

In step S11, the algorithm of the routing unit 4 starts.

The routing problem for a connection corresponds to a delay constraint least cost routing problem, which can be formulated to minimize the cost of a path from origin to destination subject to the path QoS constraints meeting the end-to-end constraints. In the device 10, constraints are added that check per hop constraints. If an edge (of the network graph) not fulfills the per hop constraint, the corresponding edge will be disabled for the delay constraint least cost routing algorithm. Thus, the routing algorithm can manage per hop and end-to-end constraints. It is also possible to use this approach for routes that need other end-to-end constraints like for example packet loss instead of delay.

In step S12, edges are reduced from the graph that have to less resources to fulfill the QoS requirements.

In step S13, the above-described routing algorithm is run.

In step S14, a resource utilization counter is updated. This counter shows how many of the available resources are used.

In step S15, the routing algorithm ends.

The information from the processes shown in Figs. 2 and 3 can then be used for the modeling unit 1 to improve the model of the network 20.

Fig. 4 shows a method for managing end-to-end connections of a network 20 within a central network management entity. The method comprises the steps 401 - 405.

In step 401, a load of the network resources is estimated.

In step 402, a quality of service status of the network 20 is provided.

In step 403, quality of service parameters within the network 20 are pre-calculated based on the load of the network resources and the quality of service status of the network 20.

In step 404, the network resources are pre-allocated based on the pre-calculated quality of service parameters.

In step 405, data packets are routed based on the pre-allocated network resources.

As can be seen in Fig. 4, the estimating step 401, the providing step 402, the pre-calculating step 403 and the pre-allocating step 404 form a first loop and the estimating step 401, the providing step 402 and the routing step 405 form a second loop.

Although the present invention has been described in accordance with preferred embodiments, it is obvious for the person skilled in the art that modifications are possible in all embodiments.

### Reference Numerals:

- 1: modeling unit
- 2: state unit
- 3: resource allocation unit
- 4: routing unit
- 10: device
- 11: control plane
- 20: network
- 21: forwarding plane
- 401 - 405: method steps
- S1 - S4: method steps
- S11 - S15: method steps

## Claims

1. A device (10) for managing end-to-end connections of a network (20) within a central network management entity, the network (20) including a plurality of network resources, the device (10) comprising:
a modeling unit (1) for estimating a load of the network resources,
a state unit (2) for providing a quality of service status of the network (20),
a resource allocation unit (3) for pre-calculating quality of service parameters within the network (20) based on the load of the network resources and the quality of service status of the network (20) and for pre-allocating the network resources based on the pre-calculated quality of service parameters, and
a routing unit (4) for routing data packets based on the pre-allocated network resources,
wherein the modeling unit (1), the state unit (2) and the resource allocation unit (3) form a first loop and wherein the modeling unit (1), the state unit (2) and the routing unit (4) form a second loop, and
wherein the modeling unit (1) is adapted to estimate the load of the network resources based on information from the routing unit (4) and based on information from the resource allocation unit (3).

2. The device according to claim 1,
wherein the modeling unit (1), the state unit (2), the resource allocation unit (3) and the routing unit (4) are located in a control plane (11) of the network (20).

3. The device according to claim 1 or 2,
wherein the resource allocation unit (3) is adapted to pre-allocate the network resources by distributing available network resources of at least one link within the network (20) to queues of the at least one link, wherein each of the queues includes data packets to be transmitted collectively.

4. The device according to claim 3,
wherein the state unit (2) is adapted to calculate a worst case delay for each queue.

5. The device according to one of claims 1 - 4,
wherein the routing unit (4) is adapted to route data packets based on the pre-allocated network resources taking into account quality of service requirements of the data packets.

6. The device according to one of claims 1 - 5,
wherein the resource allocation unit (3) is adapted to update the pre-allocation of the network resources when new links are added to the network (20) and/or existing links are removed and/or when the data packets to be transmitted change.

7. The device according to one of claims 1 - 6,
wherein the information from the routing unit (4) includes information on paths being used for the data packets within the network (20).

8. The device according to one of claims 1 to 7,
wherein the information from the resource allocation unit (3) includes information on allocated resources.

9. The device according to one of claims 1 - 8,
wherein the routing unit (4) is adapted to determine a path for the data packets to be routed by minimizing the cost of a path from origin to destination while fulfilling the quality of service requirements of the data packets from origin to destination.

10. The device according to claim 9,
wherein the quality of service requirements of the data packets from origin to destination are end-to-end quality of service requirements.

11. The device according to claim 9 or 10,
wherein the routing unit (4) is adapted to determine the path for the data packets to be routed by minimizing the cost of the path from origin to destination while fulfilling the quality of service requirements of the data packets for each hop from origin to destination.

12. The device according to claim 11,
wherein the quality of service requirements of the data packets for each hop from origin to destination are per hop quality of service requirements.

13. A method for managing end-to-end connections of a network (20) within a central network management entity, the network (20) including a plurality of network resources, the method comprising:
estimating (401) a load of the network resources,
providing (402) a quality of service status of the network (20),
pre-calculating (403) quality of service parameters within the network (20) based on the load of the network resources and the quality of service status of the network (20),
pre-allocating (404) the network resources based on the pre-calculated quality of service parameters, and
routing (405) data packets based on the pre-allocated network resources,
wherein the estimating step (401), the providing step (402), the pre-calculating step (403) and the pre-allocating step (404) form a first loop and wherein the estimating step (401), the providing step (402) and the routing step (405) form a second loop, and
wherein the estimating step (401) estimates the load of the network resources based on information from the routing step (405) and based on information from the pre-allocating step (404).

14. A computer program product comprising a program code for executing the method for managing end-to-end connections of a network within a central network management entity according to claim 13 when run on at least one computer.

## Patentansprüche

1. Vorrichtung (10) zum Verwalten von End-to-End-Verbindungen eines Netzwerks (20) in einer zentralen Netzwerkverwaltungseinheit, wobei das Netzwerk (20) mehrere Netzwerkressourcen aufweist, wobei die Vorrichtung (10) Folgendes umfasst:
ein Modellierelement (1) zum Einschätzen einer Auslastung der Netzwerkressourcen,
ein Zustandselement (2) zum Bereitstellen eines Dienstgütestatus für das Netzwerk (20),
ein Ressourcenbelegungselement (3) zum Vorausberechnen von Dienstgüteparametern im Netzwerk (20) auf der Grundlage der Auslastung der Netzwerkressourcen und des Dienstgütestatus des Netzwerks (20) und zum Vorbelegen der Netzwerkressourcen auf der Grundlage der vorausberechneten Dienstgüteparameter und
ein Routing-Element (4) zum Weiterleiten von Datenpaketen auf der Grundlage der vorbelegten Netzwerkressourcen,
wobei das Modellierelement (1), das Zustandselement (2) und das Ressourcenbelegungselement (3) eine erste Schleife und das Modellierelement (1), das Zustandselement (2) und das Routing-Element (4) eine zweite Schleife bilden und
wobei das Modellierelement (1) so ausgelegt ist, dass es auf der Grundlage von Informationen aus dem Routing-Element (4) und Informationen aus dem Ressourcenbelegungselement (3) die Auslastung der Netzwerkressourcen einschätzt.

2. Vorrichtung nach Anspruch 1,
wobei sich das Modellierelement (1), das Zustandselement (2), das Ressourcenbelegungselement (3) und das Routing-Element (4) auf einer Steuerebene (11) des Netzwerks (20) befinden.

3. Vorrichtung nach Anspruch 1 oder 2,
wobei das Ressourcenbelegungselement (3) so ausgelegt ist, dass es die Netzwerkressourcen durch Verteilen verfügbarer Netzwerkressourcen mindestens einer Verknüpfung in dem Netzwerk (20) auf Warteschlangen der mindestens einen Verknüpfung vorbelegt, wobei jede der Warteschlangen gemeinsam zu übertragende Datenpakete enthält.

4. Vorrichtung nach Anspruch 3,
wobei das Zustandselement (2) so ausgelegt ist, dass es eine Worst-Case-Verzögerung für jede Warteschlange berechnet.

5. Vorrichtung nach einem der Ansprüche 1 bis 4,
wobei das Routing-Element (4) so ausgelegt ist, dass es Datenpakete auf der Grundlage der vorbelegten Netzwerkressourcen unter Berücksichtigung von Dienstgüteanforderungen für die Datenpakete weiterleitet.

6. Vorrichtung nach einem der Ansprüche 1 bis 5,
wobei das Ressourcenbelegungselement (3) so ausgelegt ist, dass es die Vorbelegung der Netzwerkressourcen aktualisiert, wenn neue Verknüpfungen zum Netzwerk (20) hinzugefügt und/oder vorhandene Verknüpfungen entfernt werden und/oder sich die zu übertragenden Datenpakete ändern.

7. Vorrichtung nach einem der Ansprüche 1 bis 6,
wobei die Informationen aus dem Routing-Element (4) Informationen zu Pfaden enthalten, die im Netzwerk (20) für die Datenpakete benutzt werden.

8. Vorrichtung nach einem der Ansprüche 1 bis 7,
wobei die Informationen aus dem Ressourcenbelegungselement (3) Informationen zu belegten Ressourcen enthalten.

9. Vorrichtung nach einem der Ansprüche 1 bis 8,
wobei das Routing-Element (4) so ausgelegt ist, dass es einen Pfad für die Datenpakete bestimmt, die so weitergeleitet werden sollen, dass sich die Kosten für einen Pfad vom Ausgangs- bis zum Zielpunkt auf ein Minimum beschränken und gleichzeitig die Dienstgüteanforderungen für die Datenpakete vom Ausgangs- bis zum Zielpunkt erfüllt werden.

10. Vorrichtung nach Anspruch 9,
wobei es sich bei den Dienstgüteanforderungen für die Datenpakete vom Ausgangs- bis zum Zielpunkt um End-to-End-Dienstgüteanforderungen handelt.

11. Vorrichtung nach Anspruch 9 oder 10,
wobei das Routing-Element (4) so ausgelegt ist, dass es den Pfad für die Datenpakete bestimmt, die so weitergeleitet werden sollen, dass sich die Kosten für den Pfad vom Ausgangsbis zum Zielpunkt auf ein Minimum beschränken und gleichzeitig die Dienstgüteanforderungen für die Datenpakete bei jedem Hop vom Ausgangs- bis zum Zielpunkt erfüllt werden.

12. Vorrichtung nach Anspruch 11,
wobei es sich bei den Dienstgüteanforderungen für die Datenpakete bei jedem Hop vom Ausgangs- bis zum Zielpunkt um Dienstgüteanforderungen je Hop handelt.

13. Verfahren zum Verwalten von End-to-End-Verbindungen eines Netzwerks (20) in einer zentralen Netzwerkverwaltungseinheit, wobei das Netzwerk (20) mehrere Netzwerkressourcen aufweist, wobei das Verfahren Folgendes umfasst:
Einschätzen (401) einer Auslastung der Netzwerkressourcen,
Bereitstellen (402) eines Dienstgütestatus für das Netzwerk (20),
Vorausberechnen (403) von Dienstgüteparametern im Netzwerk (20) auf der Grundlage der Auslastung der Netzwerkressourcen und des Dienstgütestatus des Netzwerks (20),
Vorbelegen (404) der Netzwerkressourcen auf der Grundlage der vorausberechneten Dienstgüteparameter und
Weiterleiten (405) von Datenpaketen auf der Grundlage der vorbelegten Netzwerkressourcen,
wobei das Einschätzen (401), das Bereitstellen (402), das Vorausberechnen (403) und das Vorbelegen (404) eine erste Schleife und das Einschätzen (401), das Bereitstellen (402) und das Weiterleiten (405) eine zweite Schleife bilden und
wobei beim Einschätzen (401) die Auslastung der Netzwerkressourcen auf der Grundlage von Informationen vom Weiterleiten (405) und Informationen vom Vorbelegen (404) eingeschätzt wird.

14. Computerprogrammprodukt, das einen Programmcode zum Ausführen des Verfahrens zum Verwalten von End-to-End-Verbindungen eines Netzwerks in einer zentralen Netzwerkverwaltungseinheit nach Anspruch 13 bei Ausführen auf mindestens einem Computer umfasst.

## Revendications

1. Dispositif (10) pour gérer des connexions de bout en bout d'un réseau (20) à l'intérieur d'une entité centrale de gestion de réseau, le réseau (20) incluant une pluralité de ressources de réseau, le dispositif (10) comprenant :
une unité de modélisation (1) pour estimer une charge des ressources de réseau ;
une unité d'état (2) pour fournir un état de qualité de service du réseau (20) ;
une unité d'allocation de ressources (3) pour pré-calculer des paramètres de qualité de service à l'intérieur du réseau (20) sur la base de la charge des ressources de réseau et de l'état de qualité de service du réseau (20) et pour pré-allouer les ressources de réseau sur la base des paramètres de qualité de service pré-calculés ; et
une unité de routage (4) pour router des paquets de données sur la base des ressources de réseau pré-allouées ; dans lequel :
l'unité de modélisation (1), l'unité d'état (2) et l'unité d'allocation de ressources (3) forment une première boucle et dans lequel l'unité de modélisation (1), l'unité d'état (2) et l'unité de routage (4) forment une seconde boucle ; et dans lequel :
l'unité de modélisation (1) est adaptée pour estimer la charge des ressources de réseau sur la base d'une information en provenance de l'unité de routage (4) et sur la base d'une information en provenance de l'unité d'allocation de ressources (3).

2. Dispositif selon la revendication 1, dans lequel l'unité de modélisation (1), l'unité d'état (2), l'unité d'allocation de ressources (3) et l'unité de routage (4) sont localisées dans un plan de commande (11) du réseau (20).

3. Dispositif selon la revendication 1 ou 2, dans lequel l'unité d'allocation de ressources (3) est adaptée pour pré-allouer les ressources de réseau en distribuant des ressources de réseau disponibles d'au moins une liaison à l'intérieur du réseau (20) sur des files d'attente de l'au moins une liaison, dans lequel chacune des files d'attente inclut des paquets de données qui sont destinés à être transmis collectivement.

4. Dispositif selon la revendication 3, dans lequel l'unité d'état (2) est adaptée pour calculer un retard de pire cas pour chaque file d'attente.

5. Dispositif selon l'une des revendications 1 à 4, dans lequel l'unité de routage (4) est adaptée pour router des paquets de données sur la base des ressources de réseau pré-allouées en prenant en compte des exigences de qualité de service des paquets de données.

6. Dispositif selon l'une des revendications 1 à 5, dans lequel l'unité d'allocation de ressources (3) est adaptée pour mettre à jour la pré-allocation des ressources de réseau lorsque de nouvelles liaisons sont ajoutées au réseau (20) et/ou lorsque des liaisons existantes sont supprimées et/ou lorsque les paquets de données qui sont destinés à être transmis changent.

7. Dispositif selon l'une des revendications 1 à 6, dans lequel l'information en provenance de l'unité de routage (4) inclut une information concernant des voies qui sont en train d'être utilisées pour les paquets de données à l'intérieur du réseau (20).

8. Dispositif selon l'une des revendications 1 à 7, dans lequel l'information en provenance de l'unité d'allocation de ressources (3) inclut une information qui concerne des ressources allouées.

9. Dispositif selon l'une des revendications 1 à 8, dans lequel l'unité de routage (4) est adaptée pour déterminer une voie pour les paquets de données qui sont destinés à être routés en minimisant le coût d'une voie depuis une origine jusqu'à une destination tout en satisfaisant les exigences de qualité de service des paquets de données depuis l'origine jusqu'à la destination.

10. Dispositif selon la revendication 9, dans lequel les exigences de qualité de service des paquets de données depuis l'origine jusqu'à la destination sont des exigences de qualité de service de bout en bout.

11. Dispositif selon la revendication 9 ou 10, dans lequel l'unité de routage (4) est adaptée pour déterminer la voie pour les paquets de données qui sont destinés à être routés en minimisant le coût de la voie depuis l'origine jusqu'à la destination tout en satisfaisant les exigences de qualité de service des paquets de données pour chaque bond depuis l'origine jusqu'à la destination.

12. Dispositif selon la revendication 11, dans lequel les exigences de qualité de service des paquets de données pour chaque bond depuis l'origine jusqu'à la destination sont des exigences de qualité de service par bond.

13. Procédé pour gérer des connexions de bout en bout d'un réseau (20) à l'intérieur d'une entité centrale de gestion de réseau, le réseau (20) incluant une pluralité de ressources de réseau, le procédé comprenant :
l'estimation (401) d'une charge des ressources de réseau ;
la fourniture (402) d'un état de qualité de service du réseau (20) ;
le pré-calcul (403) de paramètres de qualité de service à l'intérieur du réseau (20) sur la base de la charge des ressources de réseau et de l'état de qualité de service du réseau (20) ;
la pré-allocation (404) des ressources de réseau sur la base des paramètres de qualité de service pré-calculés ; et
le routage (405) de paquets de données sur la base des ressources de réseau pré-allouées ; dans lequel :
l'étape d'estimation (401), l'étape de fourniture (402), l'étape de pré-calcul (403) et l'étape de pré-allocation (404) forment une première boucle et dans lequel l'étape d'estimation (401), l'étape de fourniture (402) et l'étape de routage (405) forment une seconde boucle ; et dans lequel :
l'étape d'estimation (401) estime la charge des ressources de réseau sur la base d'une information en provenance de l'étape de routage (405) et sur la base d'une information en provenance de l'étape de pré-allocation (404).

14. Progiciel comprenant un code de programme pour exécuter le procédé pour gérer des connexions de bout en bout d'un réseau à l'intérieur d'une entité centrale de gestion de réseau selon la revendication 13 lorsqu'il est exécuté sur au moins un ordinateur.
